(19) **Europäisches Patentamt**

**European Patent Office**

**Office européen des brevets**

(11) Veröffentlichungsnummer : **0 388 975 B1**

(12) **EUROPÄISCHE PATENTSCHRIFT**

(45) Veröffentlichungstag der Patentschrift :
**14.10.92 Patentblatt 92/42**

(51) Int. Cl.⁵ : **A47J 31/06**, A47J 31/42,
A47J 31/40

(21) Anmeldenummer : **90105567.3**

(22) Anmeldetag : **23.03.90**

(54) **Espressomaschine und Verfahren zum Brühen von Kaffee unter Verwendung derselben.**

(30) Priorität : **23.03.89 DE 3909738**

(43) Veröffentlichungstag der Anmeldung :
**26.09.90 Patentblatt 90/39**

(45) Bekanntmachung des Hinweises auf die
Patenterteilung :
**14.10.92 Patentblatt 92/42**

(84) Benannte Vertragsstaaten :
**CH DE ES FR GB IT LI NL**

(56) Entgegenhaltungen :
**DE-A- 3 316 157**

(73) Patentinhaber : **Palux Technik für die
Gastronomie GmbH
Buchener Strasse 15 Postfach 1620
W-6990 Bad Mergentheim (DE)**

(72) Erfinder : **Greiwe, Hansdieter
Lerchenweg 3
W-6973 Boxberg (DE)**

(74) Vertreter : **Bohnenberger, Johannes, Dr. et al
Meissner, Bolte & Partner Widenmayerstrasse
48
W-8000 München 22 (DE)**

## Beschreibung

Die Erfindung betrifft eine Espressomaschine nach dem Oberbegriff des Patentanspruches 1 sowie ein Verfahren zum Brühen von Kaffee unter Verwendung einer solchen Espressomaschine. Eine derartige Maschine ist in der DE-A-3316157 beschrieben.

Es sind weiterhin Espressomaschinen bekannt, bei welchen eine abgemessene Menge von Kaffeepulver in ein Brühfilter mit einem Siebboden eingefüllt wird, das Brühfilter mit einer Wasserzuführungsvorrichtung formschlüssig verbunden wird, um dann kochendes Wasser hindurchzuleiten und so den Espresso aufzubrühen. Nach Durchgang einer vorbestimmten Menge von Wasser wird das Filter wieder von Hand abgenommen und dann zur Entfernung des Filterkuchens ausgeklopft, bevor die nächste Befüllung mit Kaffeepulver erfolgen kann. Eine Automatisierung der Espressozubereitung ist bei einer solchen Maschine nicht möglich. Weiterhin besteht das Problem, daß das Filtersieb immer wieder von Hand gereinigt werden muß, damit die feinen Öffnungen darin nicht verstopfen.

Ausgehend vom oben genannten Stand der Technik, ist es Aufgabe der Erfindung, eine Espressomaschine der eingangs genannten Art dahingehend weiterzubilden, daß eine Vielzahl von Espresso-Portionen unter einer selbsttätigen Steuerung aufgebrüht werden kann.

Diese Aufgabe wird durch die im Patentanspruch 1 angegebenen Merkmale gelöst. Verfahrensmäßig wird die Aufgabe unter Benutzung einer solchen Espressomaschine durch die Merkmale des Anspruches 15 gelöst.

Ein wesentlicher Punkt der Erfindung liegt darin, daß das Filter-Sieb Öffnungen aufweist, deren Querschnitte einstellbar sind. Dadurch ist gewährleistet, daß während des Brühvorganges ein kleiner Öffnungsquerschnitt wählbar ist, so daß das Kaffeepulver sicher zurückgehalten wird. Nach dem Brühvorgang führt man den Filterkuchen ab und erweitert den Querschnitt der Öffnungen, so daß schließlich Rückstände, gegebenenfalls aber auch der gesamte Filterkuchen durch die erweiterten Öffnungen herausgespült werden können. Erst dadurch ist eine automatisierte Espressoherstellung möglich.

Vorzugsweise sind zum Verändern der Querschnitte in die Öffnungen des Brühfilter-Siebes einschiebbare Nadeln vorgesehen, die derart geformt sind, daß die Öffnungen je nach Einschubtiefe der Nadeln mehr oder wenig verschlossen werden. Wenn die Nadeln einen Schaft aufweisen, dessen Durchmesser nur geringfügig unter demjenigen der Öffnungen liegt, so können Kaffeeteilchen aus den Öffnungen sicher entfernt werden. Vorzugsweise sind die Nadeln in ihren Endbereichen konisch oder abgeflacht ausgebildet. Weiterhin weisen die Nadeln vorzugsweise eine Stelle verjüngten Durchmessers auf, so daß man sie insbesondere zu Beginn des Brühvorganges tief in das Kaffeepulver hineinschieben kann, gleichzeitig aber eine ringförmige Öffnung geringen Querschnitts zwischen den Nadeln und dem Sieb verbleibt, so daß Espresso austreten kann. Nach dem Anbrühen zieht man dann die Nadeln soweit zurück, daß ihre Spitzen in den Öffnungen verbleiben und so deren gewünschten Querschnitt definieren, wobei im Kaffee aufgrund der in der üblichen Weise vorgenommenen Kompaktierung Hohlräume verbleiben, welche das Durchströmen des Filterkuchens erleichtern.

Die Nadeln werden vorzugsweise in einem gemeinsamen, relativ zum Sieb geführten Halter befestigt, so daß nur zwei Teile gegeneinander bewegt werden müssen.

Man kann das Brühfilter in ein und derselben Position befüllen, den Espresso brühen und den Filterkuchen abführen. Hierbei kommt es nur darauf an, daß keine Reste des Filterkuchens in den frisch gebrühten Espresso gelangen, was z.B. durch entsprechende Ventilvorrichtungen erzielt werden kann. Bei einer bevorzugten Ausführungsform der Erfindung wird das Brühfilter derart bewegbar in einem Halter angeordnet, daß es zwischen mindestens zwei Positionen hin- und herbewegbar oder verschwenkbar ist, wobei in einer Position der Brühvorgang durchgeführt wird. Vorzugsweise wird in einer weiteren Position das frische Kaffeepulver eingeführt und in einer dritten Position der Filterkuchen entfernt.

Zum Entfernen des Filterkuchens hebt man diesen vorteilhafterweise aus dem Filter und zwar entweder mittels des darin beweglich angeordneten Siebes oder mittels der Nadeln und räumt dann den Filterkuchen mit einem Schieber oder dergleichen ab.

Das Verschieben des Siebes geschieht vorzugsweise über Hubstifte oder dergleichen, die unter Abdichtung gehalten und von außen bewegbar sind. Diese Hubstifte können gleichzeitig Teile von Ventileinrichtungen bilden, welche ein Spülrohr zum Ausspülen von Kaffeeresten absperren. Ein weiteres Ventil ist zum Absperren der Espresso-Auslauföffnung vorgesehen, wobei dieses Ventil formschlüssig mit dem Sieb so gekoppelt sein kann, daß in der hochgehobenen Stellung des Siebes zum Abführen des Filterkuchens die Espresso-Ablauföffnung verschlossen wird.

Weitere bevorzugte Ausführungsformen der Erfindung ergeben sich aus den Unteransprüchen und der nachfolgenden Beschreibung von Ausführungsbeispielen, die anhand von Abbildungen näher erläutert werden. Hierbei zeigen:

Fig. 1 einen Längsschnitt durch eine erste bevorzugte Ausführungsform der Erfindung in zwei Positionen des Filtersiebes;

Fig. 2 einen Querschnitt entlang der Linie II-II aus Figur 1;

Fig. 3 einen Teil-Längsschnitt durch ein Filtersieb mit eingesetzter Nadel;

Fig. 4a bis 4e verschiedene Positionen eines Brühfilters nach den Figuren 1 und 2 beim Brühen von Espresso;

Fig. 5 eine schematisierte Seitenansicht einer Espressomaschine, bei der drei verschiedene Arbeitspositionen gezeigt sind;

Fig. 6 eine Draufsicht auf einen Halter zur Aufnahme von insgesamt vier Brühfiltern;

Fig. 7 eine Schnittansicht ähnlich der nach Figur 1 zur Erläuterung einer weiteren Ausführungsform der Erfindung;

Fig. 8 einen Schnitt entlang der Linie VIII-VIII aus Figur 7;

Fig. 9 bis 11 verschiedene Querschnitte durch Filtersiebe mit eingesetzten Nadeln;

Fig. 12 einen Schnitt entlang der Linie XII-XII aus Figur 10.

Fig. 13 einen Schnitt durch eine weitere bevorzugte Ausführungsform der Erfindung ähnlich der nach Fig. 1, wobei Zerkleinerungsvorrichtungen vorgesehen sind,

Fig. 14 einen Schnitt entlang der Linie XIV - XIV aus Fig. 13,

Fig. 15 eine weitere Ausführungsform der Erfindung ähnlich der nach Fig. 13; und

Fig. 16 eine weitere Ausführungform mit Zerkleinerungsvorrichtung ähnlich der nach Fig. 13/15.

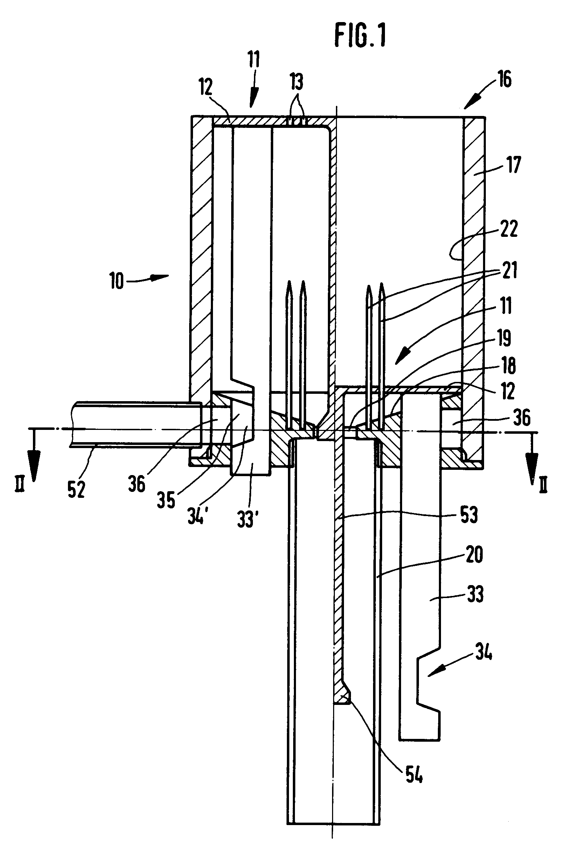

Bei der in Figur 1 gezeigten ersten bevorzugten Ausführungsform der Erfindung umfaßt das Brühfilter 10 ein Sieb 11, das von einem Siebboden 12 gebildet wird, in welchem Bohrungen 13 zur Bildung von Sieböffnungen vorgesehen sind. Das Sieb 11 ist verschiebbar und im wesentlichen dicht anliegend an einer Seitenwand 22 in einem topfförmigen Nadelhalter 17 angeordnet. Der Nadelhalter 17 weist einen Boden 18 auf, in welchem Nadeln 21 mit ihren Enden fest eingesetzt sind. Der Boden 18 ist konisch zu seiner Mitte hin abgesenkt und weist eine mittige, konzentrische Auslauföffnung 19 auf. Weiterhin sind im Boden 18 seitlich versetzt und einander diametral gegenüberliegend Bohrungen 35 vorgesehen, deren Längsachsen parallel zur Mittelachse des topfförmigen Nadelhalters 17 verlaufen.

Im Boden 18 des Nadelhalters 17 ist ein umlaufender ringförmiger Kanal 36 angebracht, der die Bohrungen 35 miteinander verbindet und in welchen ein Spülrohr 52 über eine radial verlaufende Bohrung mündet.

In die Bohrungen 35 sind Hubstifte 33, 33′ dicht eingesetzt, die mit einem Ende aus dem Nadelhalter 17 nach außen hervorstehen und mit ihrem anderen Ende am Boden 12 des Siebs 11 in Anschlag gelangen können. Eine formschlüssige Verbindung der Hubstifte 33, 33′ mit dem Boden 12 des Siebs 11 ist auch möglich.

In ihrem Endbereich weisen die Hubstifte 33, 33′ Kerben 34, 34′ auf, welche so angebracht und in ihrer Länge dimensioniert sind, daß dann, wenn die Hubstifte 33, 33′ das Sieb 11 bis zum Oberrand 16 des Nadelhalters 17 emporheben, der Innenraum des Nadelhalters 17 über die Kerben 34, 34′ mit der Nut 36 kommuniziert, so daß im Innenraum des Nadelhalters 17 befindliche Flüssigkeit über die Kerben 34, 34′ und die Ringnut 36 in das Spülrohr 52 gelangen kann.

Das Sieb 11 weist weiterhin mittig am Siebboden 12 angesetzt einen Ventilstift 53 auf, der an seinem Ende einen Ventilkörper 54 trägt. Der Durchmesser des Ventilkörpers 54 ist so bemessen, daß er im wesentlichen dicht in die Auslauföffnung 19 einsetzbar ist um diese flüssigkeitsdicht zu verschließen. Die Länge des Ventilstiftes 53 ist so bemessen, daß in der hochgehobenen Position des Siebbodens 12 (Figur 1 links) die Auslauföffnung 19 verschlossen ist.

Den Ventilstift 53 mit endseitigem Ventilkörper 54 konzentrisch umgebend ist in den Boden 18 des Nadelhalters 17 ein Auslaufrohr 20 eingesetzt, durch das der Espresso beim Brühen in eine daruntergestellte Tasse geführt wird.

Aus obigem geht hervor, daß die Auslauföffnung 19 über das Ventil 53, 54 dann verschlossen wird, wenn der Innenraum des Nadelhalters 17 über die Kerben 34, 34′ mit dem Spülrohr 52 kommuniziert, wobei in diesem Zustand der Siebboden 12 mit seiner Oberfläche im wesentlichen bündig zum Oberrand 16 des Nadelhalters 17 verläuft. In der abgesenkten Stellung des Siebs 11 steht der Innenraum des Nadelhalters 17 über die Öffnung 19 mit dem Auslaufrohr 20 in Verbindung.

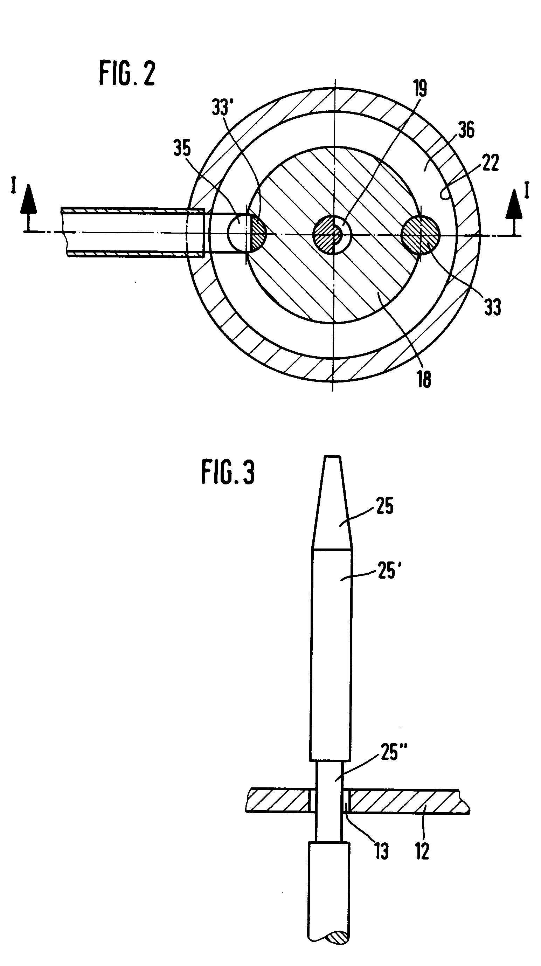

In Figur 3 ist eine bevorzugte Ausführungsform einer Nadel 21 im Detail gezeigt. Eine solche Nadel 21 umfaßt einen Nadelschaft 25′, der endseitig einen konischen Nadelendabschnitt 25 aufweist. In seinem unteren Bereich weist der Nadelschaft 25′ einen Verjüngungsabschnitt 25″ auf. Dieser Verjüngungsabschnitt 25″ ist so dimensioniert, daß beim Einsetzen einer Nadel 21 in eine Öffnung 13 des Siebbodens 12 ein ringförmiger Raum verbleibt, durch den Flüssigkeit strömen kann, der aber schmal genug ist, um Kaffeeteilchen zurückzuhalten. Wenn das Sieb 11 so weit nach oben (Figuren 1 und 3) verschoben wird, daß der konische Nadelendabschnitt 25 in Höhe der Bohrung 13 liegt, so wird ebenfalls ein ringförmiger Durchlaß für Flüssigkeit gebildet, dessen Spaltbreite so bemessen ist, daß Kaffeeteilchen sicher zurückgehalten werden.

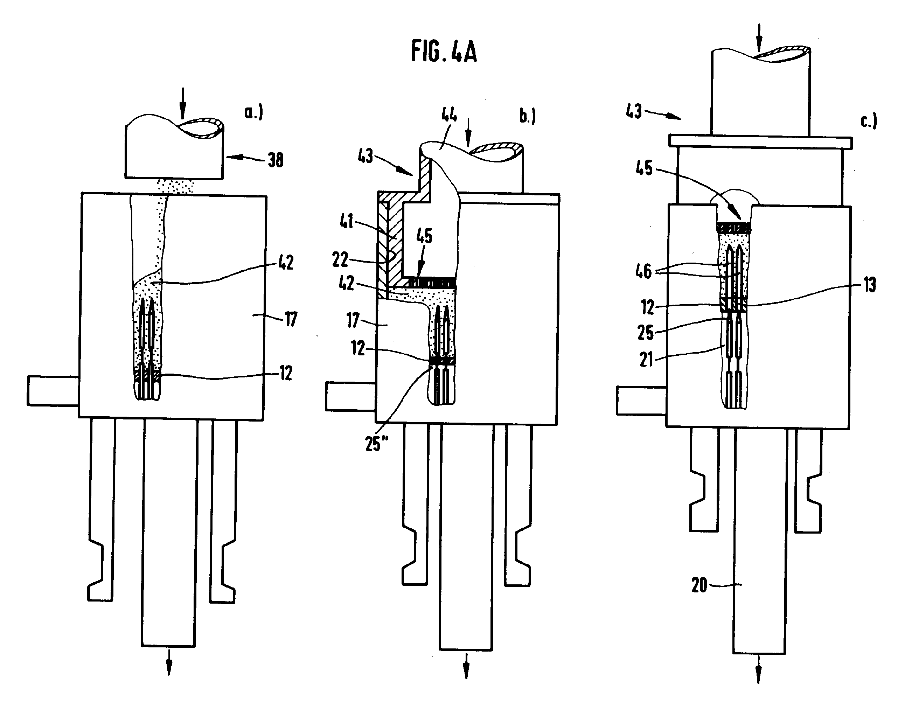

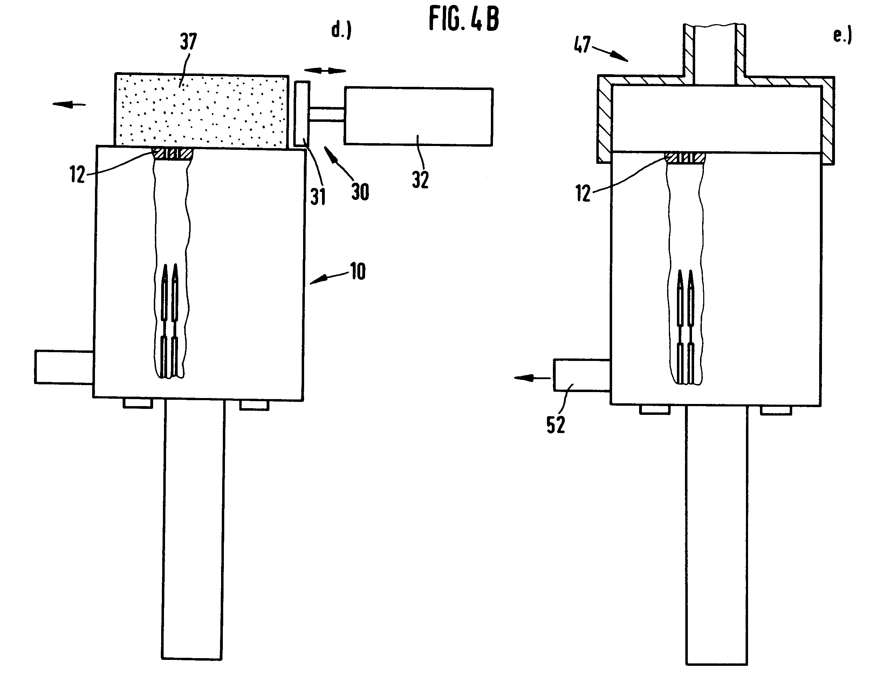

Im folgenden werden die einzelnen Verfahrensstufen beim Brühen von Espresso anhand der Figur 4 näher erläutert.

In einem ersten Schritt a befindet sich das Sieb 12 in seiner unteren Stellung. In dieser Position wird in den Hohlraum im Nadelhalter 17 über dem Sieb Kaffeepulver 42 über eine Einfülleinrichtung 38 eingefüllt. Die Öffnungen im Siebboden sind in diesem Zustand vollständig verschlossen.

In einem zweiten Schritt b wird ein Brühaufsatz 43 auf den Nadelhalter 17 aufgesetzt. Der Brühaufsatz 43 umfaßt einen zylindrischen Hohlkörper 41, der an seinem einen Ende durch einen Siebboden 45 abgeschlossen ist und der an seinem anderen Ende mit einer Zuleitung 44 in Verbindung steht. Der zylindrische Körper 41 bzw. der Siebboden 45 sind so dimensioniert, daß eine relativ enge Anlage des Gebildes an der Seitenwand 22 des Nadelhalters 17 gewährleistet ist. Die Dimensionierung ist hierbei derart, daß beim Aufsetzen des Brühaufsatzes 43 auf den Nadelhalter 17 der Siebboden 45 des Brühaufsatzes 43 das eingefüllte Kaffeepulver 42 etwas zusammendrückt. Bei dem in Figur 4 gezeigten Verfahrensschritt b wird nun der Siebboden 12 soweit angehoben, daß seine Bohrungen 13 im Bereich der Verjüngungsabschnitte 25″ liegen. In diesem Zustand wird das Kaffeepulver 42 durch Zuführung einer gewissen Menge von kochendem Wasser angebrüht. Es ist auch möglich, das Anbrühen bei im wesentlichen geschlossenen Öffnungen 13 durchzuführen, wobei dann der Siebboden 12 entweder höher oder tiefer gelagert ist.

Im Verlauf des weiteren Brühvorgangs wird dann in einem dritten Schritt c der Siebboden 12 angehoben, wobei gleichzeitig der Brühaufsatz 43 aus dem Innenraum des Nadelhalters 17 vorzugsweise um einen entsprechenden Betrag zurückgezogen wird. In diesem Zustand befinden sich die konischen Endabschnitte 25 der Nadeln 21 in Höhe der Bohrungen 13, so daß ein Filterspalt verbleibt. Durch das Zurückziehen der Nadel 21 verbleibt im (zumindest angebrühten) Kaffeepulver eine den Nadeln 21 entsprechende Anzahl von Hohlräumen 46, durch welche eine leichtere Durchströmung des entstehenden Filterkuchens sichergestellt ist.

Nach Beendigung des Brühvorgangs wird in einem vierten Schritt d der Siebboden 12 zusammen mit dem Filterkuchen 37 nach oben gehoben. Sobald diese Endposition erreicht ist, wird eine Abräumeinrichtung 30 in Betrieb gesetzt, die einen Schieber 31 umfaßt, welcher mittels eines Zylinders 32 senkrecht zur Mittelachse des Brühfilters 10 verschoben werden kann, um den Filterkuchen 37 von der Oberfläche des Siebbodens 12 fort in einen (nicht gezeigten) Abwurfschacht zu schieben. Nach dem Abräumen im Schritt d wird in einem Schritt e eine Spülvorrichtung 47 auf das Brühfilter 10 aufgesetzt. Über diese Spülvorrichtung 47 wird Spülwasser (oder Spüldampf) zur abschließendend Entfernung restlicher Kaffeeteilchen in die Anordnung eingeführt und durch das Spülrohr 52 in einen (nicht gezeigten) Ablauf abgelassen. Danach kann ein neuer Einfüllvorgang (Schritt a) stattfinden.

Das Anheben und Absenken des Siebbodens 12 geschieht durch Beaufschlagung der Hubstifte 33, 33′ durch hier nicht gezeigte elektromechanische oder pneumatische Hebeeinrichtungen. Das gleiche gilt für das Anheben und Absenken des Brühaufsatzes 43 und der Spülvorrichtung 47.

Die Verfahrensschritte b und c können während eines einzigen Brühvorganges mehrmals wiederholt werden, so daß man also immer wieder neue Hohlräume 46 zum Erleichtern des Durchfilterns öffnet und die Bohrungen 13 im Siebboden 11 freiräumt.

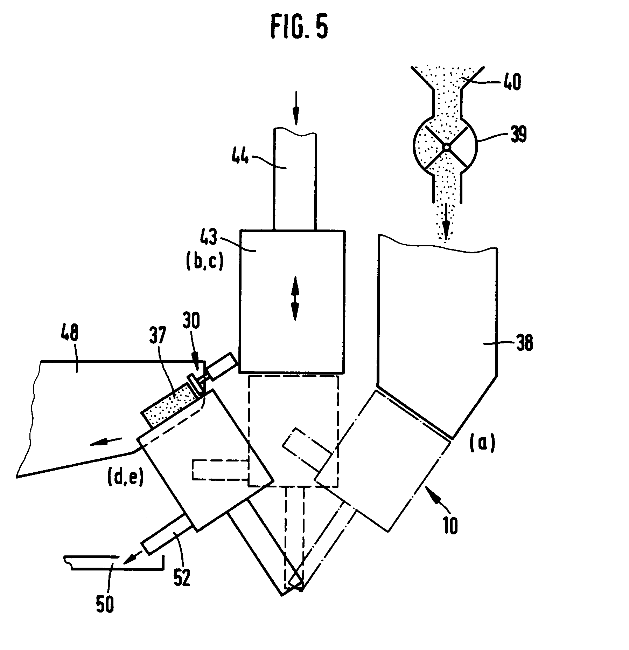

Die zuvor beschriebenen Verfahrensschritte können nun mit einer Anordnung durchgeführt werden, bei welcher das Brühfilter 10 (bzw. der Nadelhalter 17) ortsfest montiert ist. Selbstverständlich ist es auch möglich, das Brühfilter 10 horizontal oder in der Höhe zu verschieben, um es in verschiedene Positionen für die verschiedenen Verfahrensstufen zu bringen. Bei der in Figur 5 gezeigten Variante wird das Brühfilter 10 in einer Vertikalebene verschwenkt, so daß das Brühfilter für die Verfahrensstufe a (Befüllen) unter eine entsprechend geformte Einfülleinrichtung 38 mit darüber (fest) angeordneter Dosiervorrichtung 39 schwenkbar ist, so daß aus einem Kaffeevorrat 40 eine entsprechende Kaffeemenge einfüllbar ist. In der senkrechten Position des Brühfilters 10 werden die Verfahrensschritte b und c durchgeführt. Bei der in Figur 5 gezeigten, nach links verschwenkten Position wird dann der Filterkuchen 37 über die Abräumeinrichtung 30 in eine Abführrutsche 48 abgeräumt (Schritt d) woraufhin eine nicht gezeigte Spülvorrichtung 47 auf das Brühfilter 10 aufgesetzt und das Brühfilter durchspült wird (Schritt e) und das Spülwasser in einen Ablauf 50 geführt wird.

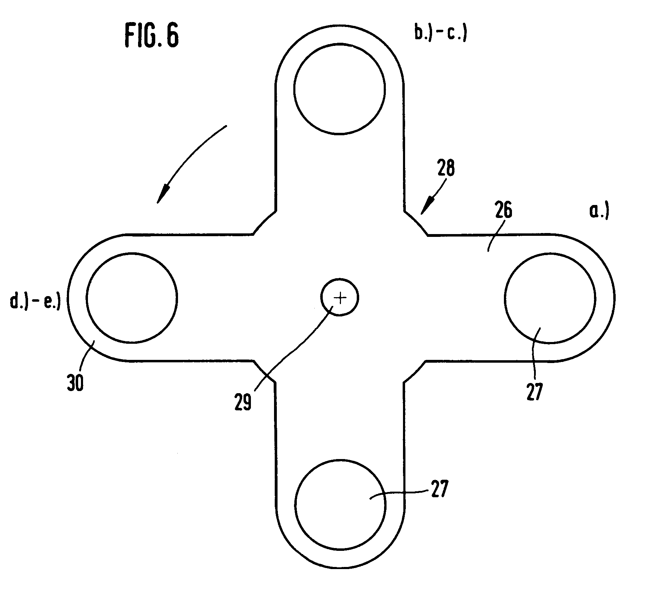

Bei der in Figur 6 gezeigten weiteren Ausführungsform der Erfindung sind mehrere Brühfilter 10 (in der Abbildung sind es vier Brühfilter) mittels Ausnehmungen 27 in Haltearmen 26 eines Halters 28 angeordnet, der um eine vertikal angeordnete Welle 29 drehbar ist. Bei dieser Anordnung kann die Abräumeinrichtung 30 ortsfest ausgebildet sein, so daß der Filterkuchen beim Drehen des Halters 28 abgeräumt wird. Ein wesentlicher Vorteil dieser Anordnung liegt darin, daß die Zyklus- bzw. Taktzeit zum Brühen verkürzt wird.

Bei einer weiteren, nicht bildlich dargestellten Ausführungsform der Erfindung sind die Bewegungsprinzipien gemäß den Figuren 5 und 6 kombiniert. Insbesondere wird bei dieser Ausführungsform der Erfindung das Brühfilter 10 beim Abräumen des Filterkuchens 37 gekippt bzw. um 180° nach unten gedreht, so daß keine gesonderte Abräumeinrichtung 30 vorgesehen sein muß, sondern eine entsprechende (vorzugsweise ruckartige) Bewegung des Siebes 11 den Filterkuchen 37 in einen darunter liegenden Auswurfschacht befördert. Das Durchspülen kann dann auch direkt durch das Auslaufrohr 20 erfolgen, so daß kein gesondertes Spülrohr 52 vorgesehen sein muß und die Ventileinrichtungen zum Öffnen und Verschließen des Spülrohres 52 bzw.

der Auslauföffnung 19 ebenfalls entfallen können.

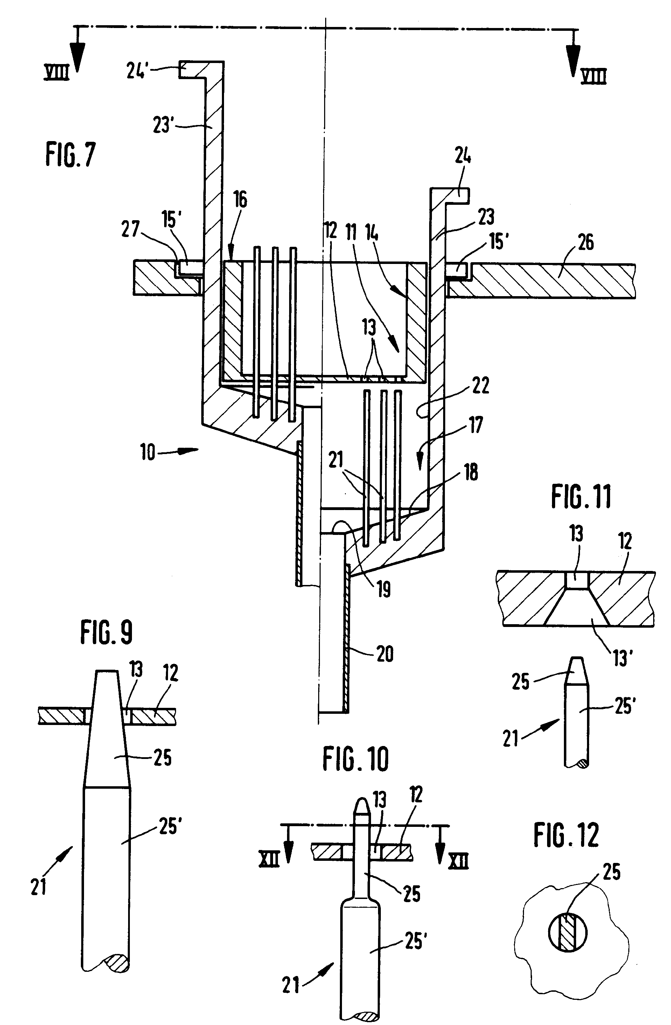

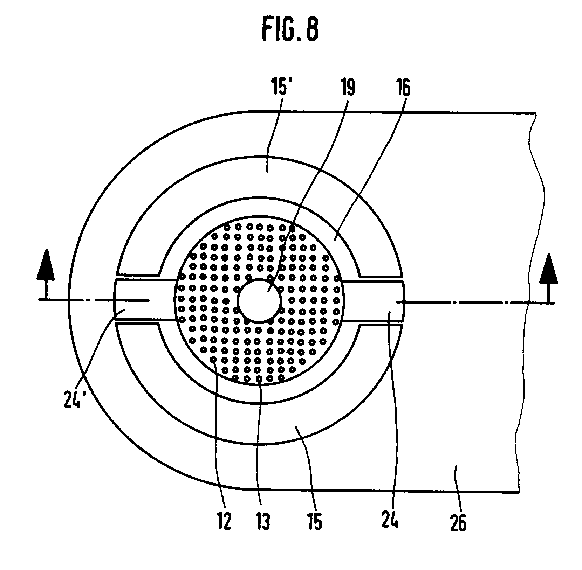

Aus obigem geht hervor, daß die Relativbewegung zwischen den Nadeln 21 und dem Boden 12 des Siebs 11 einen wesentlichen Punkt der Erfindung darstellt. Diese Bewegbarkeit kann man gemäß einer weiteren, in den Figuren 7 und 8 gezeigten Ausführungsform der Erfindung auch auf andere Weise als durch die zuvor beschriebenen Hubstifte 33, 33′ erhalten. Bei dieser Ausführungsform ist das Sieb 11 topfförmig ausgebildet, wobei das Sieb den Boden 12 des Topfes bildet. Am Oberrand ist das Sieb 11 mit radial nach außen hervorstehenden Flanschen 15, 15′ versehen, die zum Halten des Brühfilters 10 in einer Ausnehmung 27 im Haltearm 26 dienen.

Der Nadelhalter 17 ist mit nach oben ragenden Verlängerungen 23, 23′ versehen, die an ihrem Ende Betätigungsflansche 24, 24′ aufweisen. Bei dieser Anordnung wird also nicht das Sieb 11 angehoben, sondern vielmehr der Nadelhalter 17. Das Ausstoßen des Filterkuchens erfolgt über ein entsprechend weites anheben der Nadeln 21, die aufgrund ihrer Vielzahl den kompaktieren Filterkuchen ohne dessen Zerstörung anheben können.

In den Figuren 9 bis 11 sind weitere bevorzugte Ausführungsformen der Nadeln 21 in einer Übersicht dargestellt. Figur 9 zeigt die bereits zuvor beschriebene Variante, bei welcher der Endabschnitt 25 aller Nadeln 21 konisch ausgebildet ist. Bei der in Figur 10 dargestellten Ausführungsform (in Figur 12 ist ein Horizontalschnitt gezeigt) ist der Endabschnitt 25 der Nadeln 21 abgeflacht, so daß zwei Filterspalte mit kreisabschnittsförmigen Querschnitten verbleiben. Bei dieser Variante werden somit die Filterspalte nicht durch die Relativposition zwischen Nadelendabschnitt 25 und Öffnung 13 bestimmt, sondern durch die Formgebung des Endabschnittes 25.

Um das Einführen der Nadelendabschnitte 25 in die Öffnungen 13 zu erleichtern, ist es von Vorteil, wenn - wie in Figur 11 gezeigt - der untere Abschnitt der Bohrungen 13 als konischer Abschnitt 13′ sich nach außen erweiternd ausgebildet ist.

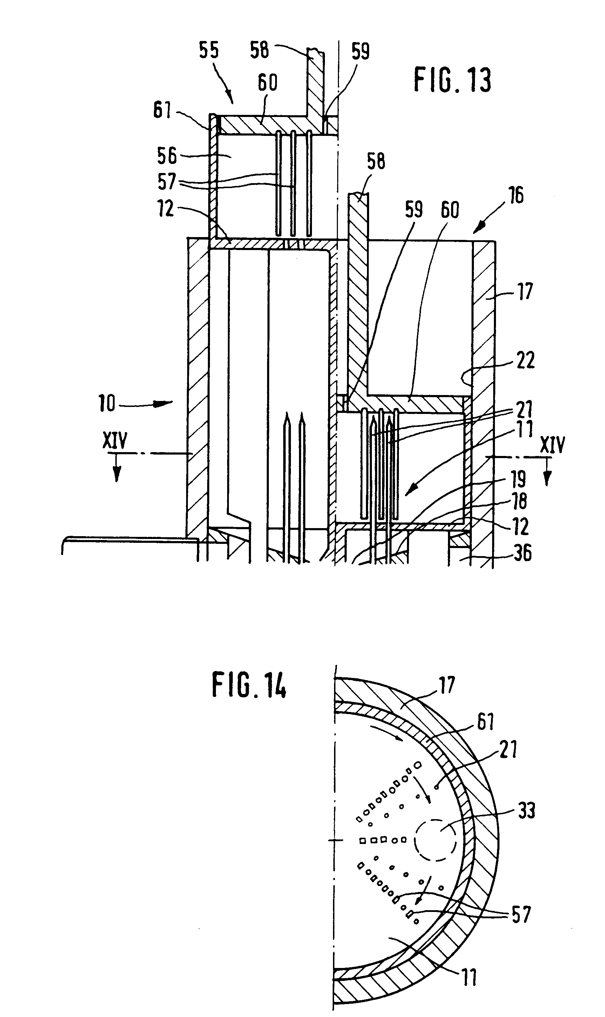

In Fig. 13 ist eine weitere Ausführungsform der Erfindung gezeigt. Bei dieser ist über dem Siebboden 12 eine Einfülleinrichtung 55 gebildet, die eine Wand 61 über dem Siebboden 12 und einen Deckel 60 umfaßt, der (vertikal) relativ zum Siebboden 12 bewegbar ist. Der Deckel 60 weist eine Rohrleitung 58 auf, über welche Brühwasser über eine Einlauföffnung 59 in den Raum 56 eingeführt werden kann.

Weiterhin sind vom Deckel 60 nach unten, in Richtung auf den Siebboden 12 ragend Zerkleinerungselemente 57 vorgesehen. Die Zerkleinerungselemente 57 sind derart versetzt zu den Nadeln 21 angeordnet (siehe Fig. 14), daß der Deckel 60 gegenüber dem Siebboden 12 um die Längsachse der Gesamtanordnung drehbar ist und die Zerkleinerungselemente 57 hierbei zwischen den Nadeln 21 hindurchlaufen können.

Bei dieser Ausführungssform der Erfindung werden anstelle von Kaffeepulver Kaffeebohnen in den Raum 56 eingefüllt, der dann über den Deckel 60 verschlossen wird. Die Gesamtanordnung (Siebboden 12, Deckel 60) wird nun nach unten in Richtung auf die Nadeln 21 gefahren, so daß diese durch die Öffnungen im Siebboden in den Innenraum 56 eindringen und die Kaffeebohnen zerbrechen bzw. spalten. Es ist möglich, diese Bewegung als Auf-/Abbewegung mehrmals hintereinander durchzuführen, so daß die Nadeln 21 die im Raum 56 befindlichen Bohnen in Bruchstücke zerkleinern. Weiterhin kann der Deckel 60 relativ zum Siebboden 12 gedreht werden, so daß die Zerkleinerungselemente 57 zwischen den Nadeln 21 durchlaufen und dabei die Kaffeebruchstücke weiter zerkleinern. Daraufhin kann der Brühvorgang wie gewöhnlich seinen Fortgang nehmen.

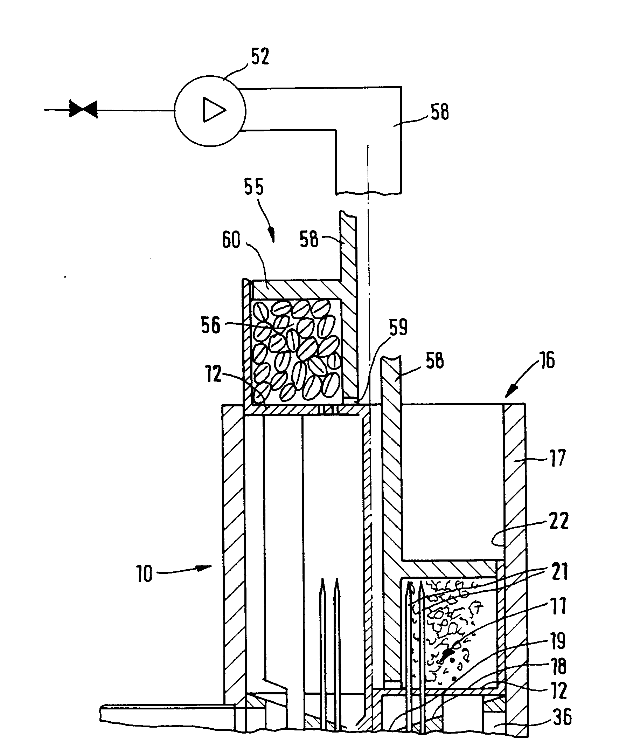

Bei der in Fig. 15 gezeigten Ausführungsform sind keine gesonderten Zerkleinerungselemente vorgesehen. Hier wird das Zerkleinern ausschließlich durch die Nadeln 21 besorgt.

Wie in Fig. 15 gezeigt, kann die Zuführung von Brühwasser über die Rohrleitung 58 und die Einlauföffnung 59 mit Hilfe einer Pumpe 52 geschehen. Es ist nun von großem Vorteil, wenn die Pumpe 52 als Hochdruck-Pumpe ausgebildet ist, die heißes Wasser mit erhöhtem Druck, vorzugsweise über 50 bar, insbesondere aber über 100 bar zuführt. Insbesondere dann, wenn kein Kaffeepulver, sondern lediglich - wie zuvor beschrieben - gröbere Kaffeebruchstücke vorliegen, ist diese Hochdruck-Brühung von sehr großem Vorteil. Durch den hohen Druck, der gegebenenfalls oszillierend (also immer wieder steigend und sinkend) aufgebracht wird, kann eine erhöhte Menge von Aromastoffen aus dem Kaffee herausgelöst werden.

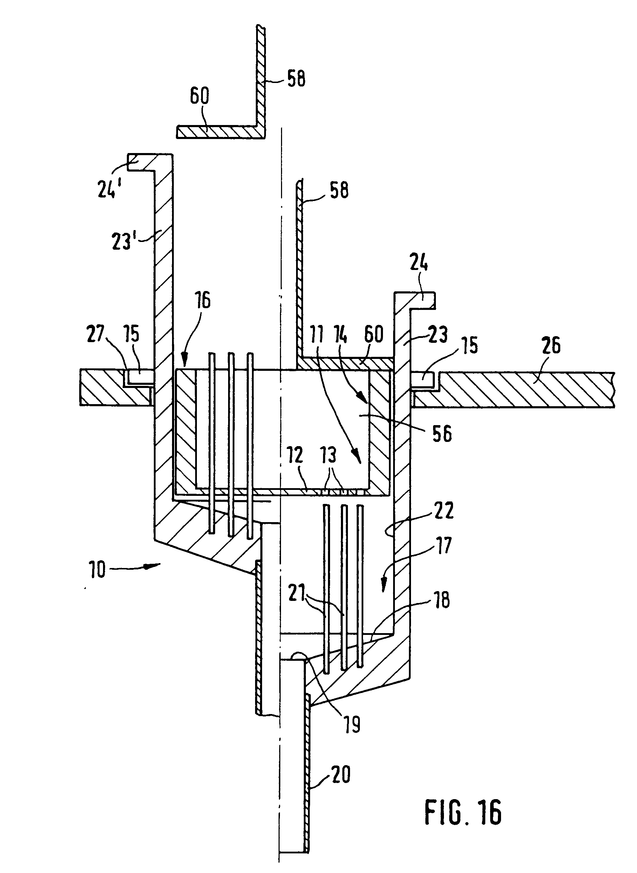

Die in Fig. 16 gezeigte Ausführungsform der Erfindung ähnelt der nach Fig. 7, ist aber ebenfalls mit einem Deckel 60 mit daran befindlichem Rohranschluß 58 ausgestattet. Auch hier kann durch mehrmaliges Hineinstoßen der Nadeln 21 in den Innenraum 56 ein "Mahlvorgang" stattfinden. Auch hier wird vorzugsweise wieder eine Hochdruckpumpe zum Zuführen des Brühwassers vorgesehen.

**Patentansprüche**

1. Espressomaschine mit einem Brühfilter (10), in das Kaffeepulver (42) einfüllbar ist und das ein Sieb (11, 12) mit Öffnungen (13) mit definierten Querschnitten umfaßt, um beim Brühen das Kaffeepulver zurückzuhalten,
**gekennzeichnet durch**
Einrichtungen (21) zum Verändern der Querschnitte der Öffnungen (13).

2. Espressomaschine nach Anspruch 1,
**dadurch gekennzeichnet,**
daß die Einrichtungen zum Verändern der Querschnitte in die Öffnungen (13) einschiebbare Nadeln (21) umfassen, die über ihre Länge in mindestens zwei Stufen (25, 25', 25'') unterschiedlicher Querschnitte unterteilt sind, so daß die Öffnungen (13) im Sieb (11, 12) je nach Einschubtiefe der Nadeln (21) mehr oder weniger verschließbar sind.

3. Espressomaschine nach Anspruch 2,
**dadurch gekennzeichnet,**
daß die Nadeln (21) jeweils mindestens einen Abschnitt (25') umfassen, dessen Querschnitt im wesentlichen demjenigen der Öffnungen (13) entsprechen, so daß beim Einschieben der Nadeln (21) in die Öffnungen (13) in diesen befindliche Kaffeeteilchen herausschiebbar sind.

4. Espressomaschine nach einem der Ansprüche 2 oder 3,
**dadurch gekennzeichnet,**
da die Nadeln (21) in ihren Endbereichen (25) konisch oder abgeflacht ausgebildet sind.

5. Espressomaschine nach einem der Ansprüche 2 bis 4,
**dadurch gekennzeichnet,**
daß die Nadeln (21) im Bereich ihres Schaftes (25') verjüngte Abschnitte (25'') aufweisen.

6. Espressomaschine nach einem der Ansprüche 2 bis 5,
**dadurch gekennzeichnet,**
daß alle Nadeln (21) an einem gemeinsamen Nadelhalter (17) unter dem Sieb (11' 12) befestigt sind, der relativ zum Sieb (11, 12) in Richtung der Nadeln (21) oder umgekehrt verschiebbar ist.

7. Espressomaschine nach einem der Ansprüche 2 bis 6,
**dadurch gekennzeichnet,**
daß die Nadeln (21) zur völligen Freigabe der Öffnungen (13) vollständig aus diesen herausziehbar und wieder einsetzbar gehalten sind.

8. Espressomaschine nach Anspruch 6,
**dadurch gekennzeichnet,**
daß das Sieb (11, 12) im Nadelhalter (17) geführt ist.

9. Espressomaschine nach einem der Ansprüche 2 bis 8,
**gekennzeichnet durch**
eine Abräumeinrichtung (30) die derart ausgebildet ist, daß ein Filterkuchen (37) abräumbar ist.

10. Espressomaschine nach einem der Ansprüche 1 bis 9,
**dadurch gekennzeichnet,**
daß das Brühfilter (10) derart bewegbar in einem Halter (28) angeordnet ist, daß es zwischen mindestens zwei Positionen hin- und herbewegbar oder verschwenkbar ist, wobei in einer Position Wasser für den Brühvorgang zuführbar ist und in mindestens einer anderen Position Kaffeepulver (47) einfüllbar bzw. ein Filterkuchen (37) entfernbar ist.

11. Espressomaschine nach Anspruch 10,
**dadurch gekennzeichnet,**
daß im Halter (28) mehrere Brühfilter (10), vorzugsweise eine mindestens der Anzahl von möglichen Positionen entsprechende Anzahl von Brühfiltern (10) angeordnet ist.

12. Espressomaschine nach Anspruch 6,
**gekennzeichnet durch**
Hubstifte (33, 33'), die unter Abdichtung durch den Nadelhalter (17) geführt und von außen zum Bewegen des Siebes (11, 12) relativ zum Nadelhalter (17) betätigbar sind.

13. Espressomaschine nach einem der vorhergehenden Ansprüche,
**dadurch gekennzeichnet,**
daß ein Spülrohr (52) mit einer ersten Ventileinrichtung (34, 35) und eine zweite Ventileinrichtung (53, 54) zum Absperren einer Auslauföffnung (19) für den Espresso vorgesehen sind.

14. Espressomaschine nach Anspruch 13,
**dadurch gekennzeichnet,**
daß die erste und die zweite Ventileinrichtung zum alternativen Öffnen miteinander in fester Verbindung stehen.

15. Espressomaschine nach einem der Ansprüche 1 bis 14,
**gekennzeichnet durch**
eine Einrichtung (55), die derart ausgebildet und angeordnet ist, daß Kaffeebohnen in einen Raum (56) über dem Sieb (11) einfüllbar und dort vor dem Brühen über Zerkleinerungseinrichtungen (21, 57) zerkleinerbar sind.

16. Espressomaschinen nach Anspruch 15,
**dadurch gekennzeichnet,** daß
die Zerkleinerungseinrichtungen die Nadeln (21) und/oder zusätzliche Zerkleinerungselemente (57) aufweisen, welche gegenüber dem Sieb (11) und/oder den Nadeln (21) bewegbar sind.

17. Espressomaschine nach einem der Ansprüche 15 oder 16,
**gekennzeichnet durch**
eine Hochdruckpumpe (62), über die Wasser zum Brühen in dem Raum (56) mit zerkleinerten Kaffeebohnen unter erhöhtem Druck haltbar ist.

18. Verfahren zum Brühen von Espresso unter Verwendung einer Espressomaschine nach einem der Ansprüche 2 bis 4,
**dadurch gekennzeichnet,**
daß vor oder während des Brühens die Nadeln (21) kurzzeitig in das (kompaktierte) Kaffeepulver hineingestoßen und unter Zurücklassen von Ablauf-Hohlräumen (26) wieder zurückgezogen werden.

19. Verfahren nach Anspruch 18,
**dadurch gekennzeichnet,** daß Kaffeebohnen in einen Raum über dem Sieb eingefüllt und dort zerkleinert werden.

20. Verfahren nach Anspruch 19,
**dadurch gekennzeichnet,** daß
die Kaffeebohnen durch gegebenenfalls mehrmaliges Hin- und Herbewegen der Nadeln zerkleinert werden.

21. Verfahren nach einem der Ansprüche 18 bis 20,
**dadurch gekennzeichnet,** daß
Wasser beim Brühen des Kaffees mittels einer Pumpe unter erhöhtem Druck gehalten wird.

**Claims**

1. An espresso machine comprising a brewing filter (10) adapted to be filled with powdered coffee (42) and including a strainer (11, 12) having openings (13) of defined cross-sections for retaining the powdered coffee during brewing,
**characterized by**
means (21) for varying the cross-sections of said openings (13).

2. The espresso machine as claimed in claim 1,
**characterized in**
that said means for varying the cross-sections comprise needles (21) which are adapted to be inserted into said openings (13) and which are subdivided along their lengths into at least two stepped portions (25, 25', 25") of different cross-sections so that said openings (13) in said strainer (11, 12) are adapted to be closed to a greater or lesser extent in accordance with the depth of insertion of said needles (21).

3.  The espresso machine as claimed in claim 2,
    **characterized in**
    that each of said needles (21) comprises at least a portion (25') the cross-section of which substantially corresponds to that of said openings (13) so that upon insertion of said needles (21) into said openings (13) any coffee particles in said openings can be pushed out.

4.  The espresso machine as claimed in any one of claims 2 or 3,
    **characterized in**
    that the end portions (25) of said needles (21) are of conical or flattened configuration.

5.  The espresso machine as claimed in any one of claims 2 to 4,
    **characterized in**
    that said needles (21) comprise reduced-diameter portions (25") in their shaft (25') regions.

6.  The espresso machine as claimed in any one of claims 2 to 5,
    **characterized in**
    that all of said needles (21) are mounted on a common needle holder (17) beneath said strainer (11, 12), said needle holder being movable relative to said strainer (11, 12) in the direction of said needles (21) or away therefrom.

7.  The espresso machine as claimed in any one of claims 2 to 6,
    **characterized in**
    that for completely releasing said openings (13) said needles (21) are held so as to be completely withdrawable from and reinsertable into said openings.

8.  The espresso machine as claimed in claim 6,
    **characterized in**
    that said strainer (11, 12) is guided in said needle holder (17).

9.  The espresso machine as claimed in any one of claims 2 to 8,
    **characterized by**
    removal means (30) designed for removal of a filter cake (37).

10. The espresso machine as claimed in any one of claims 1 to 9,
    **characterized in**
    that said brewing filter (10) is movably disposed in a holder (28) so as to be reciprocable or pivotable between at least two positions, wherein in one position water for the brewing operation can be supplied and in at least one other position powdered coffee (42) can be charged or a filter cake (37) be removed, respectively.

11. The espresso machine as claimed in claim 10,
    **characterized in**
    that a plurality of brewing filters (10), preferably a number of brewing filters (10) corresponding to at least the number of possible positions, is mounted in said holder (28).

12. The espresso machine as claimed in claim 6,
    **characterized by**
    elevating pins (33, 33') which are sealingly guided by said needle holder (17) and are operable from the outside for moving said strainer (11, 12) relative to said needle holder (17).

13. The espressso machine as claimed in any one of the preceding claims,
    **characterized in**
    that a flushing tube (52) having first valve means (34, 35) and second valve means (53, 54) for blocking a discharge opening (19) for the espresso are provided.

14. The espresso machine as claimed in claim 13,

8

**characterized in**
that said first and said second valve means are in permanent communication with each other for being opened alternatively.

15. The espresso machine as claimed in any one of claims 1 to 14,
**characterized by**
means (55) adapted and disposed so that coffee beans can be charged in a space (56) above said strainer (11) where they can be comminuted by comminuting means (21, 57) prior to brewing.

16. The espresso machine as claimed in claim 15,
**characterized in**
that said comminuting means comprise said needles (21) and/or additional comminuting elements (57) which are movable relative to said strainer (11) and/or said needles (21).

17. The espresso machine as claimed in any one of claims 15 or 16,
**characterized by**
a high-pressure pump (62) through which water for brewing can be held at an elevated pressure in said space (56) with comminuted coffee beans.

18. A method of brewing espresso by using an espresso machine as claimed in any one of claims 2 to 4,
**characterized in**
that prior to or during brewing said needles (21) are briefly pushed into the (compacted) powdered coffee and are again withdrawn, leaving discharge cavities (26) behind.

19. The method as claimed in claim 18,
**characterized in**
that coffee beans are charged in a space above said strainer where they are comminuted.

20. The method as claimed in claim 19,
**characterized in**
that said coffee beans are comminuted by optionally repeated reciprocating movement of said needles.

21. The method as claimed in any one of claims 18 to 20,
**characterized in**
that during brewing of the coffee, water is held at an elevated pressure by means of a pump.

**Revendications**

1. Machine à café express, comprenant un filtre à percolation (10), dans lequel peut être introduite de la poudre de café (42), et un tamis (11,12) présentant des orifices (13) à sections transversales définies, afin de retenir la poudre de café lors de la percolation, caractérisée par des dispositifs (21) destinés à faire varier les sections transversales des orifices (13).

2. Machine à café express selon la revendication 1, caractérisée en ce que les dispositifs destinés à faire varier les sections transversales dans les orifices (13) comprennent des aiguilles (21) insérables, subdivisées en longueur en au moins deux niveaux (25,25′,25″) à sections transversales différentes, de sorte que les orifices (13) ménagés dans le tamis (11,12) soient susceptibles d'être obturés plus ou moins suivant le profondeur de pénétration des aiguilles (21).

3. Machine à café express selon la revendication 2, caractérisée en ce que les aiguilles (21) comprennent chaque fois au moins une section (25′) dont la section transversale correspond sensiblement à celle des orifices (13), de sorte que lors de la pénétration des aiguilles (21) dans les orifices (13), des particules de café se trouvant dans ceux-ci soient susceptibles d'être extraites.

4. Machine à café express selon l'une des revendications 2 et 3, caractérisée en ce que les aiguilles (21) sont réalisées avec des zones d'extrémité (25) coniques ou aplaties.

5. Machine à café express selon l'une des revendications 2 à 4, caractérisée en ce que les aiguilles (21) présentent des sections effilées (25″) dans la zone de leur fût (25′).

6. Machine à café express selon l'une des revendications 2 à 5, caractérisée en ce que toutes les aiguilles (21) sont fixées sur un porte-aiguilles (17) commun, disposé sous le tamis (11,12) et déplaçable par rapport à ce dernier, dans le sens d'action des aiguilles (21) ou dans le sens inverse.

7. Machine à café express selon l'une des revendications 2 à 6, caractérisée en ce que les aiguilles (21) sont susceptibles d'être entièrement sorties des orifices (13), pour produire un dégagement complet, et d'être de nouveau introduites.

8. Machine à café express selon la revendication 6, caractérisée en ce que le tamis (11,12) est guidé dans le porte-aiguilles (17).

9. Machine à café express selon l'une des revendications 2 à 8, caractérisée par un dispositif de dégagement (30), réalisé de telle façon qu'un gâteau de filtre (37) est susceptible d'être enlevé.

10. Machine à café express selon l'une des revendications 1 à 9, caractérisée en ce que le filtre de percolation (10) est déplaçable dans un support (28), de telle façon qu'il puisse se déplacer ou pivoter dans un sens et dans l'autre, entre au moins deux positions, où, dans une position, de l'eau est susceptible d'être amenée pour le processus de percolation et où dans l'autre position, de la poudre de café (47) est susceptible d'être introduite, respectivement un gâteau de filtre (37) est susceptible d'être enlevé.

11. Machine à café express selon la revendication 10, caractérisée en ce que plusieurs filtres à percolation (10), de préférence un nombre de filtres de percolation (10) correspondant au moins au nombre de positions possibles, sont disposés dans le support (28).

12. Machine à café express selon la revendication 6, caractérisée par des tiges de levage (33,33′), guidées de façon étanche à travers le porte-aiguilles (17) et actionnables de l'extérieur, en vue de déplacer le tamis (11,12) par rapport au porte-aiguilles (17).

13. Machine à café express selon l'une des revendications précédentes, caractérisée en ce qu'un tube de rinçage (52) avec un premier dispositif à soupape (34,35) et un deuxième dispositif à soupape (53,54) sont prévus, en vue d'obturer une ouverture d'évacuation (19) pour le café express.

14. Machine à café express selon la revendication 13, caractérisée en ce que les premier et deuxième dispositif à soupape sont mutuellement en liaison rigide, en vue d'opérer alternativement une ouverture.

15. Machine à café express selon l'une des revendications 1 à 14, caractérisée par un dispositif (55), réalisé et disposé de telle façon que les grains de café sont susceptibles d'être introduits dans un espace (56) situé au-dessus du tamis (11) et, de là, broyés avant percolation, au moyen de dispositifs de broyage (21,57).

16. Machine à café express selon la revendication 15, caractérisée en ce que les dispositifs de broyage présentent les aiguilles (21) et/ou des éléments de broyage (57) supplémentaires, lesquels sont déplaçables par rapport aux tamis (11) et/ou aux aiguilles (21).

17. Machine à café express selon la revendication 15 ou 16, caractérisée par une pompe à haute pression (62), par l'intermédiaire de laquelle de l'eau peut être fournie sous haute pression, pour la percolation dans l'espace (56), avec des grains de café broyés.

18. Procédé de percolation de café en utilisant une machine à café express selon l'une des revendications 2 à 4, caractérisé en ce qu'avant ou pendant la percolation, les aiguilles (21) sont brièvement introduites dans la poudre de café (compactée) et de nouveau rétractées, en laissant subsister des espaces creux d'écoulement (26).

19. Procédé selon la revendication 18, caractérisé en ce que les grains de café sont introduits dans un espace situé au-dessus du tamis et y sont broyés.

20. Procédé selon la revendication 19, caractérisé en ce que les grains de café sont broyés au moyen d'un mouvement d'avance et de recul des aiguilles, effectué le cas échéant plusieurs fois.

**21.** Procédé selon l'une des revendications 18 à 20, caractérisé en ce que de l'eau est maintenue à pression élevée, au moyen d'une pompe, pendant la percolation du café.

# FIG.1

FIG. 2

33'
35
19
36
22
33
18

I

FIG. 3

25
25'
25''
13
12

FIG. 4A

FIG. 4B

# FIG. 5

FIG. 6

EP 0 388 975 B1

FIG.7

FIG.11

FIG.9

FIG.10

FIG.12

18

# FIG. 8

FIG. 13

FIG. 14

FIG. 15

FIG. 16